# EUROPÄISCHE PATENTSCHRIFT

(11) **EP 2 218 956 B1**
(45) Veröffentlichungstag und Bekanntmachung des Hinweises auf die Patenterteilung: **18.03.2015**
(21) Anmeldenummer: 10001191.5
(22) Anmeldetag: 05.02.2010
(51) Int. Cl.: F16L 21/06, F16L 21/08, F16L 47/12

(54) **Rohrverbindungsvorrichtung**
Pipe connection device
Dispositif de liaison de conduits

(30) Priorität: 07.02.2009 DE 102009007821
(43) Veröffentlichungstag der Anmeldung: 18.08.2010
(73) Patentinhaber: Rehau AG + Co, 95111 Rehau (DE)
(72) Erfinder: Heinrich, Gerhard, 91362 Pretzfeld (DE)

(56) Entgegenhaltungen:
- EP-A1- 1 544 527
- WO-A1-00/77435
- CA-A1- 2 299 696
- DE-U1-202005 019 635
- GB-A- 1 446 718
- US-A- 4 609 210

## Beschreibung

Die Erfindung betrifft eine Rohrverbindungsanordnung, umfassend zwei in Verbindung stehende Rohre und eine Rohrverbindungsvorrichtung zur Verbindung der Rohre, wobei die Rohrverbindungsvorrichtung schalenartige Haltelemente umfasst, die klemmend über der Stoßstelle der Rohre festlegbar sind, um die Rohre formschlüssig zu verbinden.

Aus der DE 20 2005 019 635 U1 ist eine Rohrverbindungsvorrichtung bekannt, die sich unter Verwendung von Krallelementen in das zu haltende Rohr einschneidet. Dabei wird das Rohrmaterial erheblich geschwächt und es entsteht eine potentielle Abrisskante, an welcher die Gefahr eines Rohrabrisses besteht, z. B. bei einer Rohrerwärmung durch heißes Wasser. Darunter leidet die Betriebssicherheit des gesamten Rohrsystems.

Eine Anordnung mit den Merkmalen des Anspruchs 1 ist aus der WO 00/77435 A1 bekannt.

Der Erfindung liegt die Aufgabe zugrunde, eine verbesserte Rohrverbindungsvorrichtung bereitzustellen, durch welche die Betriebssicherheit eines Rohrsystems erhöht werden kann.

Dazu ist erfindungsgemäß vorgesehen, dass eines der Haltelemente einen konvex ausgebildeten Eindrückabschnitt aufweist, der ohne die Rohroberfläche zu verletzen in die Wandung eines der Rohre eindrückbar ist, um die Rohrverbindungsvorrichtung verschiebesicher an dem Rohr festzulegen. Durch das Eindrücken des konvex ausgebildeten Eindrückabschnitts wird die Rohrverbindungsvorrichtung formschlüssig an dem geklemmten Rohr festgelegt. Im Gegensatz zur herkömmlichen Rohrverbindungsvorrichtung wird das Rohrmaterial jedoch nicht geschwächt und eine radiale Abrisskante wird vermieden. Besonders bei Kunststoffrohren lassen sich die elastischen Eigenschaften des Rohrmaterials hervorragend nutzen. Die erfindungsgemäße Rohrverbindungsvorrichtung ist besonders geeignet zur Verbindung von Rohren mit verformbarer Wandung, insbesondere Abwasserrohren aus Kunststoff. Unter Verwendung der erfindungsgemäßen Rohrverbindungsvorrichtung wird die Betriebssicherheit des Rohrsystems erheblich erhöht, besonders bei einer Rohrerwärmung z. B. durch heißes Abwasser.

Der Eindrückabschnitt ist im Wesentlichen wulstförmig ausgebildet . Ein wulstförmiger Eindrückabschnitt ist aufgrund der großen Kontaktfläche gut am Halteelement verankert und kann große Kräfte aufnehmen bzw. übertragen.

Erfindungsgemäß weist die Rohrverbindungsvorrichtung eine Führungseinrichtung auf, um die Halteelemente bei der Montage über der Stoßstelle der Rohre zueinander auszurichten. Dadurch kann verhindert werden, dass sich die Halteelemente in radialer Richtung aufeinander schieben und die Rohre bei der Montage der Rohrverbindungsvorrichtung unsachgemäß einklemmen oder sogar schädigen. Folglich wird die Montage der Rohrverbindungsvorrichtung durch die Führungseinrichtung erheblich vereinfacht.

Ferner umfasst die Führungseinrichtung Führungsabschnitte, die an unterschiedlichen Halteelementen ausgebildet sind und in radialer Richtung überlappend anordenbar sind. Dadurch können die Halteelemente, die bei der Montage der Rohrverbindungsvorrichtung über der Stoßstelle der Rohre angeordnet werden, ihre bestimmungsgemäße Montageposition einfach finden, wobei gleichzeitig verhindert wird, dass sich die Halteelemente in radialer Richtung aufeinander schieben.

Begriffe und Formulierungen, die im Rahmen dieser Beschreibung Verwendung finden, werden im Folgenden erläutert.

Der Begriff "Rohr" umfasst auch "Rohrformteile" oder dergleichen. Der Begriff "Stoßstelle" soll den Bereich der Rohrverbindung beschreiben, an welchem die Rohre aufeinander stoßen oder das eine Rohr in das andere eintritt, wenn sich die Rohre an den Enden überlappen. Die Formulierung "dass eines der Haltelemente einen konvex ausgebildeten Eindrückabschnitt aufweist" ist so zu verstehen, dass mindestens eines der Haltelemente wenigstens einen konvex ausgebildeten Eindrückabschnitt aufweist. Es ist bevorzugt, dass die Haltelemente jeweils mehrere konvex ausgebildete Eindrückabschnitte aufweisen. Die Formulierung "klemmend über der Stoßstelle der Rohre festlegbar" bedeutet, dass die Rohrverbindungsvorrichtung klemmend an zumindest einem der beiden Rohre gehalten werden kann und sich über die Stoßstelle erstreckt, um mit dem anderen Rohr in Eingriff zu gelangen. Dabei kann die Rohrverbindungsvorrichtung klemmend an einem oder beiden Rohren gehalten werden. Die Eindrückabschnitte können also auch an beiden Enden der Halteelemente vorgesehen werden. Die Formulierung "ohne die Rohroberfläche zu verletzen" ist so zu verstehen, dass die zusammenhängende Rohroberfläche durch das Eindrücken des Eindrückabschnitts nicht aufgebrochen wird. Anders als die herkömmliche Rohrverbindungsvorrichtung verzichtet die erfindungsgemäße Rohrverbindungsvorrichtung auf eine Schneide, die sich in die Rohroberfläche einschneidet und den Oberflächenverbund empfindlich stört.

Bevorzugte Ausführungen werden in den Unteransprüchen beansprucht.

Es kann sich als hilfreich erweisen, wenn der Eindrückabschnitt punkt- oder linienförmig in das festzuklemmende Rohr eindrückbar ist. Durch diesen Eindrückabschnitt kann ein Formschluss in axialer Richtung bewerkstelligt werden, so dass die Rohrverbindungsvorrichtung auch verdrehsicher an dem festzuklemmenden Rohr gehalten werden kann.

Es kann sich als nützlich erweisen, wenn sich der Eindrückabschnitt in Umfangsrichtung erstreckt. Dadurch kann die Rohrverbindungsvorrichtung hohen Auszugskräften in axialer Richtung des festzuklemmenden Rohres standhalten.

Es kann sich als praktisch erweisen, wenn mehrere Eindrückabschnitte in Umfangsrichtung entlang einer Line in das festzuklemmende Rohr eindrückbar sind. So kann eine effektive Verschiebesicherung bei gleichzeitiger Verdrehsicherung bewerkstelligt werden.

Es kann sich als günstig erweisen, wenn die Eindrückabschnitte derart in das festzuklemmende Rohr eindrückbar sind, um einen in Umfangsrichtung geschlossenen Ring zu binden. Dadurch kann die Rohrverbindungsvorrichtung sehr große Kräfte in axialer Richtung aufnehmen bzw. übertragen und auch besonders hohen Auszugskräften in axialer Richtung des festzuklemmenden Rohres standhalten.

Es kann von Vorteil sein, wenn der Eindrückabschnitt von einer im Wesentlichen zylindrischen oder teilzylindrischen Anlagefläche des Haltelements radial nach innen vorspringt. Der Eindrückabschnitt ist vorzugsweise an der radial nach innen gerichteten Seite abgerundet, so dass beim Eindrückvorgang große Kräfte punkt- oder linienförmig auf die Wandung des festzuklemmenden Rohres übertragen werden, die das festzuklemmende Rohr verformen, insbesondere eindrücken oder quetschen, ohne die Rohroberfläche zu verletzen. Die Anlagefläche definiert vorzugsweise einen Anlageabschnitt, dessen Innendurchmesser dem Außendurchmesser des festzuklemmenden Rohres entspricht.

Es kann nützlich sein, wenn die Halteelemente durch Spannschrauben, Spannhebel und/oder Spannschellen verbindbar sind. Durch derartige Verbindungsmittel lassen sich große Eindrückkräfte in radialer Richtung erzeugen, so dass der Eindrückabschnitt auch bei härteren Rohrmaterialien gut in die Rohrwandung eingedrückt werden kann.

Es kann praktisch sein, wenn die Halteelemente identisch ausgebildet sind. Dadurch kann die Herstellung der Rohrverbindungsvorrichtung erheblich vereinfacht werden und die Herstellungskosten können erheblich verringert werden.

Es kann von Vorteil sein, wenn die Halteelemente als Spritzgussteile aus Kunststoff ausgebildet sind. Dadurch sind auch große Stückzahlen einfach und kostengünstig herstellbar.

Es kann sich als hilfreich herausstellen, wenn die Halteelemente über eine Rasteinrichtung miteinander verrastbar sind. Dadurch kann auf einfache Weise und ohne gesondertes Werkzeug eine vorläufige Montage der Rohrverbindungsvorrichtung bewerkstelligt werden.

Es kann praktisch sein, wenn jedes Halteelement ein männliches und ein weibliches Rastelement aufweist, wobei das männliche Rastelement eines Halteelements mit dem weiblichen Rastelement eines benachbarten Halteelements in Rasteingriff bringbar ist, um die benachbarten Halteelemente zu verbinden. Dadurch können identische Halteelemente kettenförmig verbunden werden, um sich um den Umfang der Rohre zu schließen.

Es kann praktisch sein, wenn die Rohrverbindungsvorrichtung zwischen einer in Umfangsrichtung geöffneten Anordnung, in welcher die Rohrverbindungsvorrichtung über der Stoßstelle der Rohre anordenbar ist, und einer in Umfangsrichtung geschlossenen Anordnung, in welcher die Rohrverbindungsvorrichtung über der Stoßstelle der Rohre festgelegt ist, überführbar ist. Dadurch ist die Rohrverbindungsvorrichtung auch für die mehrmalige Verwendung geeignet.

### Kurze Beschreibung der Zeichnungen

- Figur 1: zeigt eine Sicht auf eine Rohrverbindungsanordnung, umfassend zwei in Verbindung stehende Rohre und eine über der Stoßstelle der Rohre montierte Rohrverbindungsvorrichtung gemäß der Erfindung in einer geschlossenen Anordnung.
- Figur 2: zeigt einen Schnitt entlang einer Linie II-II durch die Rohrverbindungsanordnung aus Fig. 1.
- Figur 3: zeigt eine Seitenansicht der erfindungsgemäßen Rohrverbindungsvorrichtung in der geschlossenen Anordnung.
- Figur 4: zeigt einen Schnitt entlang einer Linie IV-IV aus Fig. 3 durch die Rohrverbindungsvorrichtung gemäß der Erfindung in der geschlossenen Anordnung.

### Detaillierte Beschreibung des bevorzugten Ausführungsbeispiels

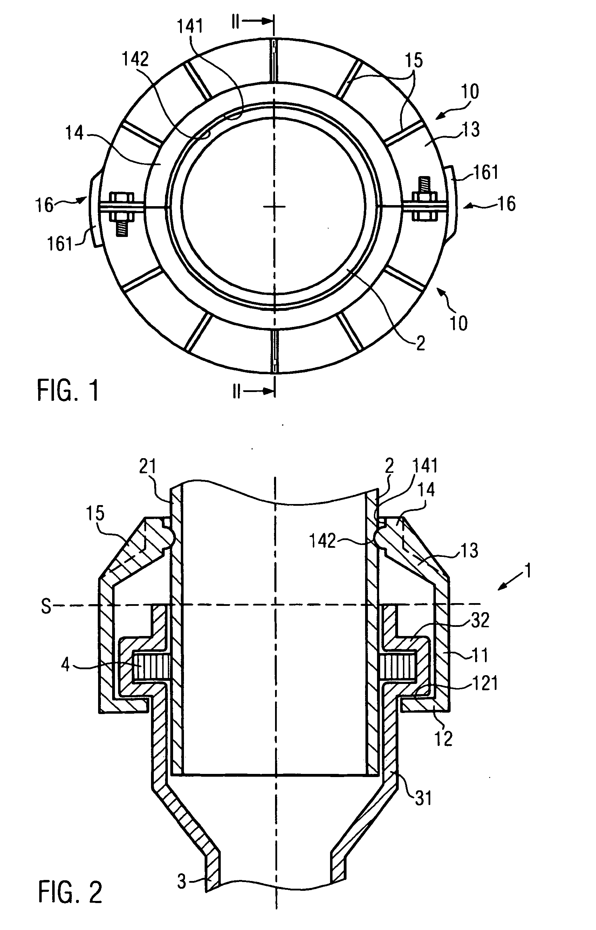

Die Figuren 1 und 2 zeigen Ansichten einer Rohrverbindungsanordnung 1, umfassend zwei in Verbindung stehende Rohre 2, 3 und eine über der Stoßstelle S der Rohre 2, 3 montierte Rohrverbindungsvorrichtung 1 gemäß der Erfindung in der geschlossenen Anordnung. Figur 2 zeigt einen Schnitt entlang einer Linie II-II durch die Rohrverbindungsanordnung 1 aus Fig. 1.

Die Rohre 2, 3 sind vorzugsweise Abwasserrohre aus Kunststoff, beispielsweise Polypropylen (PP), vorzugsweise mit einem Durchmesser von 40 bis 160 mm und einer Wandstärke von 1,8 bis 3,9 mm. Das Ende des Rohrs 3 ist als Steckmuffe 31 ausgebildet und umfasst eine Sicke 32. In die Steckmuffe 31 ist ein Spitzende des Rohres 2 eingefügt, wobei der Spalt zwischen den Rohren 2 und 3 über einen in der Sicke 32 angeordneten, radial umlaufenden Dichtungsring 4 abgedichtet ist. Die Stoßstelle S kennzeichnet eine Mündung der Steckmuffe 31 bzw. die Stelle, an welcher das Rohr 2 in das Rohr 3 eintritt. Das Rohr 2 kann eine Umfangserhöhung (nicht dargestellt) aufweisen, die nicht durch die Mündung der Steckmuffe 31 passt und somit die Einstecklänge des Rohrs 2 begrenzt. Diese Umfangserhöhung kann ein umlaufender Bund sein, oder durch mehrere nockenartige Erhebungen ausgebildet sein, und wird beispielsweise bei der Herstellung angeformt oder nachträglich befestigt, beispielsweise aufgeklebt oder aufgeschweißt. Vorzugsweise weist jedes Rohr an einem Ende eine Steckmuffe und am anderen Ende ein dazu passendes Spitzende auf, so dass sich Rohrketten aus baugleichen Rohren bilden lassen.

Die Rohrverbindungsvorrichtung 1 umfasst zwei schalenartige Haltelemente 10, die klemmend über der Stoßstelle S der Rohre 2, 3 festgelegt sind, um die Rohre 2, 3 formschlüssig zu verbinden. Die Haltelemente 10 sind identische Spritzgussteile aus Kunststoff und weisen in einer axialen Schnittebene in etwa ein U-Profil mit einem Basiswandabschnitt 11 und zwei radial nach innen abragenden Schenkeln 12 und 13 auf. Der Schenkel 12 steht im Wesentlichen rechtwinklig vom Basiswandabschnitt 11 radial nach innen hervor und hintergreift die Sicke 32 des Rohrs 3, wobei eine Anlagefläche 121 des Schenkels 12 an der Sicke 32 anliegt. Der Schenkel 13 schließt mit dem Basiswandabschnitt 11 vorzugsweise einen stumpfen Winkel von beispielsweise 120° ein und bildet einen Teilkegelstumpf. Der Schenkel 13 endet in einem weiteren Schenkelabschnitt 14, der einen Anlageabschnitt bildet und eine teilzylindrische Anlagefläche 141 aufweist, von welcher bzw. über welche der konvex ausgebildete Eindrückabschnitt 142 radial nach innen vorspringt. Das Haltelement 10 umfasst einen Grundkörper der im Wesentlichen durch Rotation des zuvor beschriebenen U-Profils um 180° entsteht. An der Außenseite dieses Grundkörpers sind an den Schenkeln 13 und 14 einzelne Versteifungsrippen 15 ausgebildet, die sich ausgehend vom Fußpunkt des Schenkels 13 bis zum freien Ende des Schenkels 14 erstrecken. Die Versteifungsrippen 15 sind vorzugsweise im Abstand von ca. 30° um den Umfang des Haltelements 10 angeordnet. Die Halteelemente 10 sind durch Spannschrauben, Spannhebel und/oder Spannschellen verbindbar.

Maßgeblich ist, dass der Eindrückabschnitt 142 ohne die Rohroberfläche 21 zu verletzen in die Wandung eines der Rohre 2 eindrückbar ist, um die Rohrverbindungsvorrichtung 1 verschiebesicher an dem Rohr 2 festzulegen. Der Eindrückabschnitt 142 ist beispielsweise punktförmig in das festzuklemmende Rohr 2 eindrückbar, wobei mehrere Eindrückabschnitte 142 vorzugsweise in Umfangsrichtung entlang einer Line angeordnet sind, oder ist linienförmig in das festzuklemmende Rohr 2 eindrückbar und erstreckt sich vorzugsweise in Umfangsrichtung. Die Radien des Eindrückabschnitts 142 sind entsprechend bemessen, so dass der Eindrückabschnitt 142 keine Keil- oder Kerbwirkung entfaltet, die das festzuklemmende Rohr 2 verletzen würde. Der Radius des Eindrückabschnitts 142 sollte im vorspringenden Bereich daher nicht kleiner als 0,5 mm sein.

Im vorliegenden Beispiel bildet der Eindrückabschnitt 142 in der Schnittansicht gemäß Fig. 2 einen Halbkreis.

Die Eindrückabschnitte 142 sind an verschiedenen Haltelementen 10 im Wesentlichen wulstförmig ausgebildet und erstrecken sich jeweils um 180°, um im verbundenen Zustand der Haltelemente 10 bzw. in der geschlossenen Stellung der Rohrverbindungsvorrichtung 1 einen in Umfangsrichtung geschlossenen Ring zu bilden.

Die Rohrverbindungsvorrichtung 1 umfasst zudem eine Führungseinrichtung 17, um die Halteelemente 10 bei der Montage über der Stoßstelle S der Rohre 2, 3 zueinander auszurichten. Das ist insbesondere dann von Bedeutung, wenn die Halteelemente 10 über der Stoßstelle S der Rohre 2, 3 anzuordnen und in Umfangsrichtung zu verbinden sind. Die Führungseinrichtung 17 umfasst Führungsabschnitte, die an unterschiedlichen Halteelementen 10 ausgebildet sind und in radialer Richtung überlappend anordenbar sind. Dadurch richten sich die Halteelemente 10 selbsttätig aus und nehmen die bestimmungsgemäße Montageposition ein, wenn sie einander gegenüberliegend beidseitig der zu verbindenden Rohre 2, 3 angeordnet und zusammengeführt werden.

Um eine vorübergehende Montageposition zu halten, sind die Halteelemente 10 über eine Rasteinrichtung 16 miteinander verrastbar. Jedes Halteelement 10 weist ein männliches 161 und ein weibliches Rastelement 162 auf, wobei das männliche Rastelement 161 eines Halteelements 10 mit dem weiblichen Rastelement 162 eines benachbarten Halteelements 10 in Rasteingriff bringbar ist, um die benachbarten Halteelement 10 zu verbinden.

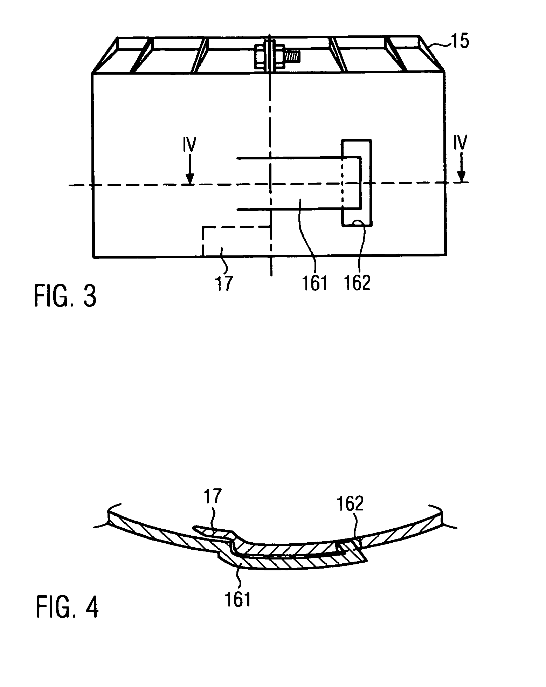

Wie in den Figuren 3 und 4 zu erkennen ist, ist das männliche Rastelement 161 ein über ein Umfangsende des Halteelements 10 hervorstehender, angeformter Rastarm mit endseitigem Haken. Das weibliche Rastelement 162 ist eine Öse im Basiswandabschnitt 11 des Halteelements 10. Die Rasteinrichtung 16 ist vorzugsweise an dem axialen Ende des Halteelements 10 ausgebildet, an dem auch die Führungseinrichtung 17 ausgebildet ist, und befindet sich vorzugsweise in etwa radial außerhalb der Führungseinrichtung 17.

Figur 4 zeigt einen Schnitt entlang einer Linie IV-IV aus Fig. 3 durch die Rohrverbindungsvorrichtung 1 gemäß der Erfindung in der geschlossenen Anordnung, wobei eine Verbindungsstelle zweier Halteelemente 10 anschaulich dargestellt ist. Der Haken am Ende des Rastarms 161 des einen Halteelements greift in die Öse 162 des anderen Halteelements ein. Um zu verhindern, dass die Führungseinrichtung 17 radial nach innen vorsteht, kann das Halteelement an geeigneter Stelle eine Tasche bzw. Ausnehmung aufweise, in welcher die Führungseinrichtung 17 aufnehmbar ist. Der Einfachheit halber ist die Tasche bzw. Ausnehmung nicht dargestellt, so dass die Führungseinrichtung 17 innen am Basiswandabschnitt des benachbarten Halteelements anliegt. Die Führungseinrichtung 17 kann somit auch selbst als Eindrückabschnitt 142 ausgebildet sein.

An dem axialen Ende des Halteelements 10, an dem der Eindrückabschnitt 142 ausgebildet ist, befinden sich Schraubflansche mit Schraubenöffnungen. Die Schraubflansche zweier Halteelemente 10 sind gegenseitig in Anlage bringbar und von Schrauben durchdringbar, so dass die Halteelemente 10 formschlüssig verbindbar sind. Durch Anziehen der Schrauben bei einer über der Stoßstelle S der Rohre 2, 3 angelegten Rohrverbindungsvorrichtung 1 wird der Eindrückabschnitt 142 in die Wandung eines der Rohre 2 eingedrückt und die Rohrverbindungsvorrichtung 1 verschiebesicher an dem Rohr 2 festgelegt. Dadurch ist die Rohrverbindungsvorrichtung 1 zwischen einer in Umfangsrichtung geöffneten Anordnung, in welcher die Rohrverbindungsvorrichtung über der Stoßstelle S der Rohre 2, 3 anordenbar ist, und einer in Umfangsrichtung geschlossenen Anordnung, in welcher die Rohrverbindungsvorrichtung 1 über der Stoßstelle S der Rohre 2, 3 festgelegt ist, überführbar.

Geeignete Materialien für die Halteelemente 10 sind vor allem Kunststoffe, insbesondere Polyacetal, z.B. Polyoxymethylen (POM) oder Polyamid. Entsprechende Materialien können auch mit Füll-Nerstärkungsstoffen modifiziert sein. Die Halteelemente 10 sind vorzugsweise aus glasfaserverstärktem Kunststoff ausbildet, vorzugsweise Polyamid 66 mit einem Glasfaseranteil von 60% (PA66-GF60). Die Wandstärke des Halteelements 10 beträgt beispielsweise 2 bis 5, vorzugsweise 3,5 mm. Wenn eine Wandstärke des festzuklemmenden Rohres 3 mm beträgt, springt der konvex gewölbte Eindrückabschnitt 142 beispielsweise 1 mm über die Anlagefläche 141 radial nach innen vor.

Die Montage der Rohrverbindungsvorrichtung 1 wird mit Bezug auf die Figuren wie folgt beschrieben:

Die Rohre 2, 3 werden mit zwischengeschaltetem Dichtungsring 4 zusammengesteckt. Die Halteelemente 10 werden einander gegenüberliegend beidseitig der zu verbindenden Rohre 2, 3 angeordnet und zusammengeführt, bis die Halteelemente 10 über die Rasteinrichtung 16 miteinander verrasten. Durch die Führungseinrichtung 17 richten sich die Halteelemente 10 selbsttätig aus und nehmen eine vorübergehende Montageposition ein. Durch die Rasteinrichtung 16 werden die Halteelemente 10 in der vorübergehenden Montageposition gehalten, in welcher die Schraubflansche der Halteelemente 10 geringfügig voneinander beabstandet sind. Anschließend werden Schrauben durch die Schraubenöffnungen geführt und die Halteelemente 10 verschraubt, bis die Schraubflansche der Halteelemente 10 auf Stoß aneinanderliegen. Durch Anziehen der Schrauben werden die Halteelemente 10 zusammengedrückt, wobei die Eindrückabschnitte 142 in die Wandung des festzuklemmenden Rohres 2 eingedrückt werden. Die Eindrückabschnitte 142 sind derart konvex ausgebildet, dass sie in die Wandung des festzuklemmenden Rohres 2 eingedrückt werden können, ohne die Rohroberfläche 21 zu verletzen, um die Rohrverbindungsvorrichtung 1 verschiebesicher an dem Rohr 2 festzulegen.

## Patentansprüche

1. Rohrverbindungsanordnung, umfassend zwei in Verbindung stehende Rohre (2, 3) und eine Rohrverbindungsvorrichtung (1) zur Verbindung der Rohre (2, 3), wobei die Rohrverbindungsvorrichtung (1) schalenartige Haltelemente (10) umfasst, die klemmend über der Stoßstelle (S) der Rohre (2, 3) festlegbar sind, um die Rohre (2, 3) form-schlüssig zu verbinden, wobei eines der Haltelemente (10) einen konvex ausgebildeten Eindrückabschnitt (142) aufweist, wobei der Eindrückabschnitt (142) im Wesentlichen wulstförmig ausgebildet ist und ohne die Rohroberfläche (21) zu verletzen in die Wandung eines der Rohre (2) eindrückbar ist, um die Rohrverbindungsvorrichtung (1) verschiebesicher an dem Rohr (2) festzulegen, **dadurch gekennzeichnet, dass** die Rohrverbindungsvorrichtung (1) eine Führungseinrichtung (17) aufweist, um die Halteelemente (10) bei der Montage über der Stoßstelle (S) der Rohre (2, 3) zueinander auszurichten, und die Führungseinrichtung (17) Führungsabschnitte umfasst, die an unterschiedlichen Halteelementen (10) ausgebildet sind und in radialer Richtung überlappend anordenbar sind.

2. Rohrverbindungsanordnung nach Anspruch 1, **dadurch gekennzeichnet, dass** der Eindrückabschnitt (142) punkt- oder linienförmig in das festzuklemmende Rohr (2) eindrückbar ist.

3. Rohrverbindungsanordnung nach einem der vorangegangenen Ansprüche, **dadurch gekennzeichnet, dass** sich der Eindrückabschnitt (142) in Umfangsrichtung erstreckt.

4. Rohrverbindungsanordnung nach einem der vorangegangenen Ansprüche, **dadurch gekennzeichnet, dass** mehrere Eindrückabschnitte (142) in Umfangsrichtung entlang einer Line in das festzuklemmende Rohr (2) eindrückbar sind.

5. Rohrverbindungsanordnung nach einem der vorangegangenen Ansprüche, **dadurch gekennzeichnet, dass** die Eindrückabschnitte (142) derart in das festzuklemmende Rohr (2) eindrückbar sind, um einen in Umfangsrichtung geschlossenen Ring zu bilden.

6. Rohrverbindungsanordnung nach einem der vorangegangenen Ansprüche, **dadurch gekennzeichnet, dass** der Eindrückabschnitt (142) von einer im Wesentlichen zylindrischen oder teilzylindrischen Anlagefläche (141) des Haltelements (10) radial nach innen vorspringt.

7. Rohrverbindungsanordnung nach einem der vorangegangenen Ansprüche, **dadurch gekennzeichnet, dass** die Halteelemente (10) durch Spannschrauben, Spannhebel und/oder Spannschellen verbindbar sind.

8. Rohrverbindungsanordnung nach einem der vorangegangenen Ansprüche, **dadurch gekennzeichnet, dass** die Halteelemente (10) identisch ausgebildet sind.

9. Rohrverbindungsanordnung nach einem der vorangegangenen Ansprüche, **dadurch gekennzeichnet, dass** die Halteelemente (10) als Spritzgussteile aus Kunststoff ausgebildet sind.

10. Rohrverbindungsanordnung nach einem der vorangegangenen Ansprüche, **dadurch gekennzeichnet, dass** die Halteelemente (10) über eine Rasteinrichtung (16) miteinander verrastbar sind.

11. Rohrverbindungsanordnung nach einem der vorangegangenen Ansprüche, **dadurch gekennzeichnet, dass** jedes Halteelement (10) ein männliches (161) und ein weibliches Rastelement (162) aufweist, wobei das männliche Rastelement (161) eines Halteelements (10) mit dem weiblichen Rastelement (162) eines benachbarten Halteelements (10) in Rasteingriff bringbar ist, um die benachbarten Halteelemente (10) zu verbinden.

12. Rohrverbindungsanordnung nach einem der vorangegangenen Ansprüche, **dadurch gekennzeichnet, dass** die Rohrverbindungsvorrichtung (1) zwischen einer in Umfangsrichtung geöffneten Anordnung, in welcher die Rohrverbindungsvorrichtung über der Stoßstelle (S) der Rohre (2, 3) anordenbar ist, und einer in Umfangsrichtung geschlossenen Anordnung, in welcher die Rohrverbindungsvorrichtung (1) über der Stoßstelle (S) der Rohre (2, 3) festgelegt ist, überführbar ist.

## Claims

1. Pipe-connecting arrangement comprising two connected pipes (2, 3) and a pipe-connecting device (1) for connecting the pipes (2, 3), wherein the pipe-connecting device (1) comprises shell-like retaining elements (10) which can be secured with clamping action over the joint (S) of the pipes (2, 3) in order to connect the pipes (2, 3) in a form-fitting manner, wherein one of the retaining elements (10) has a convex push-in portion (142), wherein the push-in portion (142) is of an essentially bead-like design and can be pushed into the wall of one of the pipes (2) without damaging the pipe surface (21) in order for the pipe-connecting device (1) to be secured in a non-displaceable manner on the pipe (2), **characterized in that** the pipe-connecting device (1) has a guide means (17) in order to align the retaining elements (10) in relation to one another when they are installed over the joint (S) of the pipes (2, 3), and the guide means (17) comprises guide portions which are formed on different retaining elements (10) and can be arranged to overlap in the radial direction.

2. Pipe-connecting arrangement according to Claim 1, **characterized in that** the push-in portion (142) can be pushed at a certain point or points, or in linear fashion, into the pipe (2) which is to be clamped.

3. Pipe-connecting arrangement according to one of the preceding claims, **characterized in that** the push-in portion (142) extends in the circumferential direction.

4. Pipe-connecting arrangement according to one of the preceding claims, **characterized in that** a plurality of push-in portions (142) can be pushed circumferentially along a line into the pipe (2) which is to be clamped.

5. Pipe-connecting arrangement according to one of the preceding claims, **characterized in that** the pipe (2) which is to be clamped can have the push-in portions (142) pushed into it such that a circumferentially closed ring is formed.

6. Pipe-connecting arrangement according to one of the preceding claims, **characterized in that** the push-in portion (142) projects radially inwardly from an essentially cylindrical or partially cylindrical abutment surface (141) of the retaining element (10).

7. Pipe-connecting arrangement according to one of the preceding claims, **characterized in that** the retaining elements (10) can be connected by tensioning screws, tensioning levers and/or clamps.

8. Pipe-connecting arrangement according to one of the preceding claims, **characterized in that** the retaining elements (10) are of identical design.

9. Pipe-connecting arrangement according to one of the preceding claims, **characterized in that** the retaining elements (10) are designed in the form of injection mouldings made of plastics material.

10. Pipe-connecting arrangement according to one of the preceding claims, **characterized in that** the retaining elements (10) can be latched to one another via a latching means (16).

11. Pipe-connecting arrangement according to one of the preceding claims, **characterized in that** each retaining element (10) has a male latching element (161) and a female latching element (162), wherein the male latching element (161) of one retaining element (10) can be brought into latching engagement with the female latching element (162) of an adjacent retaining element (10) in order for the adjacent retaining elements (10) to be connected.

12. Pipe-connecting arrangement according to one of the preceding claims, **characterized in that** the pipe-connecting device (1) can be transferred between a circumferentially open arrangement, in which the pipe-connecting device can be arranged over the joint (S) of the pipes (2, 3), and a circumferentially closed arrangement, in which the pipe-connecting device (1) is secured over the joint (S) of the pipes (2, 3).

## Revendications

1. Agencement de raccordement de tuyaux, comprenant deux tuyaux raccordés (2, 3) et un dispositif de raccordement de tuyaux (1) pour le raccordement des tuyaux (2, 3), le dispositif de raccordement de tuyaux (1) comprenant des éléments de retenue en forme de coque (10) qui peuvent être fixés par serrage par-dessus la zone d'aboutement (S) des tuyaux (2, 3), afin de raccorder les tuyaux (2, 3) par engagement par correspondance de formes, l'un des éléments de retenue (10) présentant une section d'enfoncement (142) réalisée sous forme convexe, la section d'enfoncement (142) étant réalisée essentiellement sous forme de bourrelet et pouvant être enfoncée dans la paroi de l'un des tuyaux (2) sans abîmer la surface du tuyau (21), afin de fixer le dispositif de raccordement de tuyaux (1) de manière immobile sur le tuyau (2), **caractérisé en ce que** le dispositif de raccordement de tuyaux (1) présente un dispositif de guidage (17) pour orienter les éléments de retenue (10) les uns par rapport aux autres lors du montage par-dessus la zone d'aboutement (S) des tuyaux (2, 3), et le dispositif de guidage (17) comprend des sections de guidage qui sont réalisées sur des éléments de retenue différents (10) et qui peuvent être disposées en chevauchement dans la direction radiale.

2. Agencement de raccordement de tuyaux selon la revendication 1, **caractérisé en ce que** la section d'enfoncement (142) peut être enfoncée sous forme ponctuelle ou linéaire dans le tuyau (2) devant être serré fixement.

3. Agencement de raccordement de tuyaux selon l'une quelconque des revendications précédentes, **caractérisé en ce que** la section d'enfoncement (142) s'étend dans la direction périphérique.

4. Agencement de raccordement de tuyaux selon l'une quelconque des revendications précédentes, **caractérisé en ce que** plusieurs sections d'enfoncement (142) peuvent être enfoncées dans la direction périphérique le long d'une ligne dans le tuyau (2) devant être serré fixement.

5. Agencement de raccordement de tuyaux selon l'une quelconque des revendications précédentes, **caractérisé en ce que** les sections d'enfoncement (142) peuvent être enfoncées dans le tuyau (2) devant être serré fixement afin de former un anneau fermé dans la direction périphérique.

6. Agencement de raccordement de tuyaux selon l'une quelconque des revendications précédentes, **caractérisé en ce que** la section d'enfoncement (142) fait saillie radialement vers l'intérieur depuis une surface d'appui (141) essentiellement cylindrique ou partiellement cylindrique de l'élément de retenue (10).

7. Agencement de raccordement de tuyaux selon l'une quelconque des revendications précédentes, **caractérisé en ce que** les éléments de retenue (10) peuvent être raccordés par des vis de serrage, des leviers de serrage et/ou des colliers de serrage.

8. Agencement de raccordement de tuyaux selon l'une quelconque des revendications précédentes, **caractérisé en ce que** les éléments de retenue (10) sont réalisés sous forme identique.

9. Agencement de raccordement de tuyaux selon l'une quelconque des revendications précédentes, **caractérisé en ce que** les éléments de retenue (10) sont réalisés sous forme de pièces moulées par injection de plastique.

10. Agencement de raccordement de tuyaux selon l'une quelconque des revendications précédentes, **caractérisé en ce que** les éléments de retenue (10) peuvent être encliquetés les uns dans les autres par le biais d'un dispositif d'encliquetage (16).

11. Agencement de raccordement de tuyaux selon l'une quelconque des revendications précédentes, **caractérisé en ce que** chaque élément de retenue (10) présente un élément d'encliquetage mâle (161) et un élément d'encliquetage femelle (162), l'élément d'encliquetage mâle (161) d'un élément de retenue (10) pouvant être amené en engagement d'encliquetage avec l'élément d'encliquetage femelle (162) d'un élément de retenue adjacent (10) afin de raccorder les éléments de retenue adjacents (10).

12. Agencement de raccordement de tuyaux selon l'une quelconque des revendications précédentes, **caractérisé en ce que** le dispositif de raccordement de tuyaux (1) peut être transféré entre un agencement ouvert dans la direction périphérique, dans lequel le dispositif de raccordement de tuyaux peut être disposé par-dessus la zone d'aboutement (S) des tuyaux (2, 3), et un agencement fermé dans la direction périphérique, dans lequel le dispositif de raccordement de tuyaux (1) est fixé par-dessus la zone d'aboutement (S) des tuyaux (2, 3).
